# DEMANDE DE BREVET EUROPEEN

(11) **EP 2 330 567 A1**
(43) Date de publication de la demande: **08.06.2011**
(21) Numéro de dépôt: 09306084.6
(22) Date de dépôt: 10.11.2009
(51) Int. Cl.: G07C 9/00, G07F 7/10, G06F 21/00

(54) **Procédé d'établissement d'un élément de preuve lors d'un contrôle d'une personne à l'aide d'un document électronique lui appartenant**

(71) Demandeur: Gemalto SA, 92190 Meudon (FR)
(72) Inventeur: Rouchouze, Bruno, 83270, St Cyr sur Mer (FR); Mouille, Stéphane, 13420, Gemenos (FR); Plessis, Patrice, 13780, Cuges Les Pins (FR)

(57) **Abrégé**

L'invention concerne un procédé d'établissement d'un élément de preuve lors d'un contrôle d'une personne à l'aide d'un document électronique lui appartenant. Le contrôle consiste à lire, à l'aide d'un moyen de contrôle, au moins une donnée présente dans le document électronique.

Selon l'invention, le procédé consiste à enregistrer la donnée lue avec au moins une donnée relative au contrôle, et à signer la donnée lue et la donnée relative au contrôle par une clé publique de la personne contrôlée, les données signées constituant l'élément de preuve du contrôle.

## Description

Le domaine de l'invention est celui des contrôles de documents électroniques personnels, tels que passeports, cartes d'identité, permis de séjour ou permis de conduire par exemple. Plus précisément, la présente invention concerne un procédé permettant d'établir un élément de preuve d'un contrôle d'un document électronique personnel, à l'occasion d'un tel contrôle.

Les documents électroniques personnels sont destinés à remplacer les documents papiers traditionnellement détenus par les citoyens. Ces documents papiers, tels que cartes d'identité ou permis de conduire, vont progressivement disparaître de la circulation au profit de documents électroniques tels que cartes à puce ou passeports électroniques renfermant diverses informations sur leur détenteur.

A titre d'exemple, une carte à puce ou un passeport électronique peut contenir l'empreinte digitale de son titulaire, son adresse, des données relatives à des infractions qu'il aurait commises, des données relatives à son état de santé, ou toute autre information personnelle que cette personne souhaite garder confidentielle ou en tous cas ne pas voir dévoiler à tout à chacun. La préservation de la confidentialité des informations personnelles est primordiale dans un monde où la communication est facilitée par tous les moyens de communication mis à disposition de tous, que ce soit par Internet, la téléphonie mobile ou les réseaux de communication de futures générations.

Lorsqu'un agent assermenté, par exemple un agent de police, de gendarmerie ou de douane, vérifie un document électronique d'un individu, par exemple sa carte d'identité électronique, cet agent accède à des données personnelles de son détenteur. L'accès à ces données peut être réalisé à l'aide d'un moyen de contrôle, par exemple constitué par un lecteur de carte à puce à contact ou par un lecteur de type RFID pour une lecture sans contact. Dans ce dernier cas, le document électronique comporte, outre une puce dans laquelle sont mémorisées les données personnelles de son détenteur, une antenne permettant au lecteur d'accéder aux données mémorisées dans la puce.

Le moyen de contrôle, dans le cas de la gendarmerie, est classiquement constitué par un lecteur de carte comportant deux fentes : l'une est destinée à l'insertion de la carte de la personne contrôlée, l'autre à lire, à des fins d'authentification, des données de l'agent procédant au contrôle. En l'absence de la carte de l'agent procédant au contrôle, il n'est pas possible de lire les données présentes sur la carte de la personne contrôlée. Ceci permet d'éviter que suite à un vol d'un lecteur et d'une carte personnelle, les données qui y sont mémorisées puissent être lues par la personne mal intentionnée (le voleur).

Le problème que se propose de résoudre la présente invention est le suivant : l'agent assermenté peut être une personne mal intentionnée. Pendant ou après l'accès aux données présentes sur le document électronique de la personne contrôlée, cet agent peut copier les données auxquelles il aura eu accès et les exploiter de manière frauduleuse. Cette exploitation frauduleuse peut consister à divulguer, par exemple par Internet, les données personnelles de la personne contrôlée qui, elle, ne pourra que subir le préjudice de son dommage, sauf à pouvoir rapporter un élément de preuve de son contrôle par cet agent.

La présente invention a précisément pour objectif de permettre à une personne contrôlée de rapporter la preuve de son contrôle de la part d'un agent.

A cet effet, l'invention propose une procédé d'établissement d'un élément de preuve lors d'un contrôle d'une personne à l'aide d'un document électronique lui appartenant, ce contrôle consistant à lire, à l'aide d'un moyen de contrôle, au moins une donnée présente dans le document électronique.

Selon l'invention, le procédé consiste à enregistrer la donnée lue avec au moins une donnée relative au contrôle, et à signer la donnée lue et la donnée relative au contrôle par une clé publique de la personne contrôlée, les données signées constituant l'élément de preuve du contrôle.

Ainsi, si l'agent ayant procédé au contrôle divulgue la ou les données lues dans le document électronique lors du contrôle, la personne contrôlée pourra, à l'aide de sa clé privée, prouver qu'elle aura été contrôlée par telle ou telle personne, à tel ou tel endroit et à quelle date. L'agent coupable de la divulgation des données personnelles de la personne contrôlée sera donc facilement démasqué. Ceci permet d'assurer les personnes contrôlées que, quelles que soient les données présentes dans leurs documents électroniques faisant office de documents d'identité, de permis de conduire ou de passeport, celles-ci ne seront pas dévoilées ou que si elles le deviennent, il sera possible de retrouver l'agent qui aura frauduleusement dévoilé ces informations.

Réciproquement, la solution proposée par l'invention a pour but de rassurer le détenteur d'un tel document électronique que les informations qui y sont renfermées, ne seront pas du domaine public ou que, si elles le deviennent, que l'auteur de leur divulgation sera identifié.

Dans un premier mode de mise en oeuvre, les données signées sont transmises à un site Internet. Ce site est par exemple accessible à la personne contrôlée suite à sa demande, par exemple suivant le modèle français relatif au permis à points consistant à donner en préfecture un mot de passe à la personne contrôlée pour qu'elle puisse consulter son solde de points sur son permis.

Dans un deuxième mode de mise en oeuvre, les données signées sont mémorisées dans le document électronique qui a été contrôlé. Le titulaire du document peut ainsi récupérer les données relatives à son contrôle. Alternativement, les données signées sont mémorisées dans un autre document électronique, tel qu'une carte à puce destinée à cet effet par exemple.

Dans un troisième mode de mise en oeuvre, les données signées sont imprimées, lors du contrôle, sur un reçu qui est remis à la personne contrôlée.

La donnée relative au contrôle correspond avantageusement à l'un des éléments suivants :
- le lieu du contrôle ;
- la date du contrôle ;
- l'identifiant du moyen de contrôle utilisé ;
- la marque du moyen de contrôle utilisé ;
- le type du moyen de contrôle utilisé ;
- le numéro de série du moyen de contrôle utilisé ;
- la date de vérification du moyen de contrôle utilisé ;
- le nom ou la référence de l'agent ayant utilisé le moyen de contrôle utilisé.

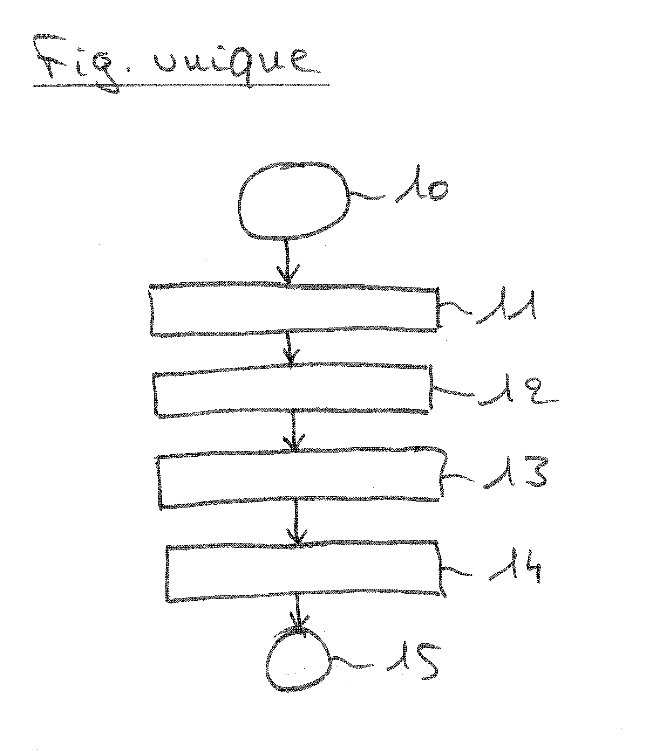

D'autres caractéristiques et avantages de l'invention apparaîtront à la lecture suivante d'un mode de mise en oeuvre avantageux de l'invention, donné à titre illustratif et non limitatif, et de la figure unique annexée représentant ce mode de mise en oeuvre préférentiel du procédé selon l'invention.

La figure unique annexée représente un mode de mise en oeuvre préférentiel du procédé selon l'invention.

L'étape 10 est une étape de début. Lors de l'étape 11, le document électronique d'une personne est contrôlé, par exemple lors d'un contrôle de gendarmerie. Ce contrôle peut consister à insérer le document électronique de la personne contrôlée dans un moyen de contrôle tel qu'un lecteur et à autoriser la lecture des données qui y sont mémorisées par l'insertion d'un document électronique appartenant au gendarme procédant au contrôle. Le lecteur, après avoir authentifié le document électronique du gendarme, autorise l'accès aux données présentes sur le document électronique de la personne contrôlée. Les données lues par le lecteur sont affichées sur un écran pour pouvoir être consultées par le gendarme et/ou comparées à d'autres données (par exemple comparaison d'une empreinte digitale lue dans le document électronique avec une empreinte digitale lue sur un lecteur d'empreinte). Après cette lecture 11, une étape 12 du procédé selon l'invention consiste à rajouter à la donnée lue une donnée relative au contrôle. Cette donnée relative au contrôle est par exemple le lieu du contrôle, la date du contrôle, l'identifiant du moyen de contrôle utilisé, la marque du moyen de contrôle utilisé, le type du moyen de contrôle utilisé, le numéro de série du moyen de contrôle utilisé, la date de vérification du moyen de contrôle utilisé, le nom ou la référence de l'agent ayant utilisé le moyen de contrôle utilisé. Le rajout de cette donnée peut simplement consister à concaténer la donnée lue (ou un identifiant correspondant à cette donnée, tel que par exemple une mention « empreinte digitale » ou « adresse ») dans le document électronique avec cette donnée relative au contrôle.

Lors d'une étape 13, la donnée lue et celle relative au contrôle sont signées par une clé publique de la personne contrôlée. Cette clé publique est par exemple contenue dans le document électronique contrôlé. Ceci permet d'assurer que seule la personne contrôlée pourra ultérieurement accéder aux données relatives à son contrôle.

Lors d'une étape 14, avant une étape de fin 15, les données signées sont stockées. Ce stockage peut consister à copier les données signées dans le document contrôlé, dans une zone réservée à cet effet, ou alors dans un autre document électronique, tel qu'une carte à puce de la personne contrôlée. Le stockage peut également consister à l'envoi des données signées vers un site Internet, à partir du moyen de contrôle.

La personne contrôlée pourra accéder à ces données ultérieurement, et, grâce à sa clé privée, pourra établir qu'elle a été contrôlée à tel ou tel endroit, par tel ou tel agent. Si cet agent devait avoir commis la faute d'avoir publié des données confidentielles obtenues lors de ce contrôle, la personne contrôlée pourra le confondre aisément.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé d'établissement d'un élément de preuve lors d'un contrôle d'une personne à l'aide d'un document électronique lui appartenant, ledit contrôle consistant à lire (11), à l'aide d'un moyen de contrôle, au moins une donnée présente dans ledit document électronique, **caractérisé en ce qu'**il consiste à enregistrer ladite donnée lue avec au moins une donnée relative audit contrôle, et à signer (13) ladite donnée lue et ladite donnée relative audit contrôle par une clé publique de ladite personne contrôlée, les données signées constituant ledit élément de preuve dudit contrôle.

2. Procédé selon la revendication 1, **caractérisé en ce que** lesdites données signées sont transmises à un site Internet.

3. Procédé selon la revendication 1, **caractérisé en ce que** lesdites données signées sont mémorisées dans ledit document électronique ou tout autre document électronique.

4. Procédé selon l'une des revendications 1 à 3, **caractérisé en ce que** ladite donnée relative audit contrôle correspond à l'un des éléments suivants :
- le lieu du contrôle ;
- la date du contrôle ;
- l'identifiant dudit moyen de contrôle utilisé ;
- la marque dudit moyen de contrôle utilisé ;
- le type dudit moyen de contrôle utilisé ;
- le numéro de série dudit moyen de contrôle utilisé ;
- la date de vérification dudit moyen de contrôle utilisé ;
- le nom ou la référence de l'agent ayant utilisé ledit moyen de contrôle utilisé.
